# EUROPEAN PATENT APPLICATION

(11) **EP 1 411 522 A2**
(43) Date of publication of application: **21.04.2004**
(21) Application number: 03023076.7
(22) Date of filing: 14.10.2003
(51) Int. Cl.: G11B 27/28, G11B 27/32, G11B 27/10, G06F 17/30, H04N 5/781, H04N 9/804

(54) **Determining a scene change point**

(30) Priority: 14.10.2002 KR 2002062378
(71) Applicant: SAMSUNG ELECTRONICS CO., LTD., Suwon-City, Kyungki-do (KR)
(72) Inventor: Kim, Kwang-jin, Suwon-city Gyunggi-do (KR); Seong, Yeong-kyung, Seoul (KR); Choi, Tae-sun, Gwangju-city (KR)
(74) Representative: Geary, Stuart Lloyd

(57) **Abstract**

A digital data recording and/or reproducing apparatus and a control method thereof, In particular, the digital data recording and/or reproducing apparatus and method are capable of recording and reproducing an incoming digital broadcasting program in compressed format. The digital data recording and/or reproducing apparatus includes a controller for counting the number of forward motion compensation interpolated macro blocks and backward motion compensation interpolated macro blocks of a bidirectionally-predictive coded picture of a group of picture of the digital data, and detecting a point where a scene change occurs. based on the counted number, and a video index generator for generating a video index by decoding an intraframe coded picture nearest to the detected point of scene change of each GOP, reproducing images and arranging the reproduced images. The navigation function is provided without requiring all the frames of the compressed broadcasting program to be decoded, but by detecting scene changes in the compressed region of the broadcasting program, and generates a video index of images of detected scene change points. Accordingly, a vast amount of multimedia data can be efficiently stored, and user friendliness is increased.

## Description

A first aspect of the invention relates to apparatus. A second aspect of the invention relates to a method of generating an index. The invention relates to determining scene change points.

Generally, navigating with audio-visual (A/V) data recording and/or reproducing (playing) apparatus refers to moving from one data reproducing point to another point selected by a user and resuming reproducing from the user selected point Navigating can also refer to rearranging the reproducing order of the recorded A/V data as desired by the user so that reproduction in a different order can occur. Accordingly, the term 'navigation data' tends to refer to additional information that is provided to allow navigation. Navigation data can include a data row temporal search table containing information corresponding to the position in the data, and a program table containing order rearranging information preset by a manufacturer.

When reproducing A/V content from data on a 2-dimensional medium such as an optical disc (e.g. a DVD), it is generally scene change information that is used to enable a user to search for a desired point on the medium. Thus, scene change information forms part of the navigation data. It is possible for a user to have all the television programs of a certain broadcasting station of the previous day recorded on a single disc. Instead of watching all the recorded programs sequentially from the first one, the viewer may want to skip some programs or parts of programs, and the scene change information can assist this.

The scene change information refers to the information about the pointer which points to a certain position of the entire region of the program. When the viewer inputs a command such as "search" that requires skipping of some scenes in the forward or backward direction, the pointer moves from the position currently being reproduced to a new reproducing position requested by the viewer. The detection of a scene change can made in one of several ways.

One existing method for detecting a scene change from the recording medium for A/V content search involves performing a discrete cosine transformation (DCT) based on the complexity of the image in a pixel region. This involves a significant amount of processing since it is necessary to decode a MPEG compressed image, recover the image, perform DCT computation, and detect a scene change in real time. This requires the provision of significant processing resources.

Two methods exist for detecting scene changes using the segmentation of digital multimedia moving picture into plural meaningful parts. One method uses pixel data relating to a reference image, and the other uses motion compensation of an image frame. The simplest method uses the difference between pixel data of two neighbouring frames. If the difference is determined to be equal to or greater than a predetermined threshold, it is determined that there is scene change. Although this technique may be effective with respect to the picture that has relatively little motion, it has considerable errors for a rapidly moving scene. The method using motion compensation is more effective, although it has significant computational requirements associated with motion vectors of the respective frames. Although phase matching can be employed, fast Fourier transforms are utilised, which require significant processing and memory resources.

The resources required to perform scene change detection as described above makes it difficult to implement in systems of relatively low capacity, such as satellite broadcasting receivers and the like.

The invention addresses the above problems.

The apparatus of the invention is characterised in having:
a controller arranged to count the number of forward motion compensation interpolated macro blocks and backward motion compensation interpolated macro blocks of a bidirectionally-predictive coded picture of a group of pictures in digital data, and to determine a scene change point based on the counted number of blocks; and
an index generator for generating an index including a decoded intraframe coded image near a scene change point so determined.

The method of generating an index of the invention is characterised in comprising:
counting the number of forward motion compensation interpolated macro blocks and backward motion compensation interpolated macro blocks of a bidirectionally-predictive coded picture of a group of pictures in digital data;
determining a scene change point from the counted number of blocks;
decoding an intraframe coded image near a determined scene change point; and
generating an index including the decoded image.

Embodiments of the present invention will now be described, by way of example only, with reference to the attached drawings, in which:
Figure 1 is a block diagram of a digital broadcasting receiver according to the invention;
Figure 2 is a block diagram of a scene change detector forming part of the receiver of Figure 1;
Figures 3A to 3C are schematic views showing the group of picture (GOP) of A/V data; and
Figure 4 is a flowchart illustrating a control method carried out by the receiver of Figure 1.

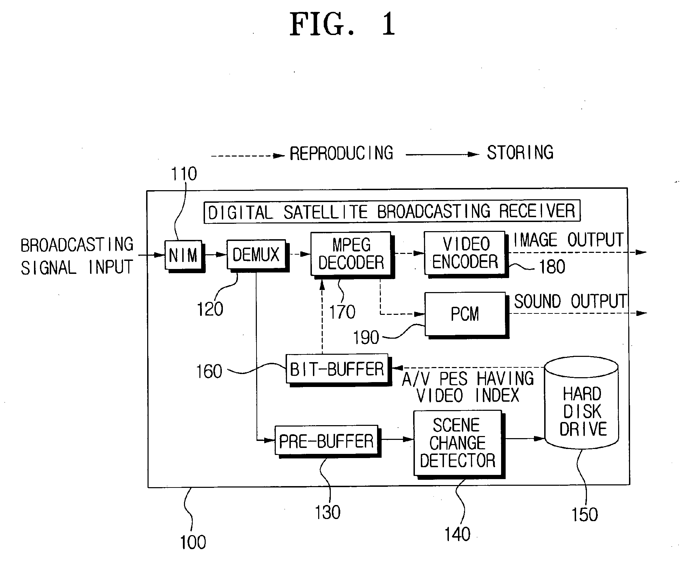

Figure 1 is a block diagram showing a digital A/V broadcasting receiver/recorder. The receiver in this example is implemented as a set top box, but this is not essential.

Referring to Figure 1, a first embodied digital broadcasting receiver according to the invention includes a network interface module (NIM) 110, a demultiplex (DEMUX) 120, a pre-buffer 130, a scene change detector 140, a recording medium 150, an MPEG decoder 170, a bit-buffer 160, a video encoder 180, and a pulse code modulator (PCM) 190.

The NIM 110 demodulates data at an input, such as a satellite, cable or terrestrial broadcast input, and provides therefrom a digital A/V signal. In this example, the digital signal contains multiple streams, each relating to a different program. The DEMUX 120 selects the data relating to a program according to a user selection, or selects data relating to a default program if no program is selected, and provides this data at its output. If recording is not required, the selected program data is transmitted to the MPEG decoder 170. If the user selects that recording of the program is required, the program data is provided to the pre-buffer 130, where it is temporarily stored. The data accumulated in the pre-buffer 130 is stored on the recording medium 150 via the scene change detector 140. It is preferable to employ a hard disc as the recording medium 150.

If the user requires reproduction of a program from data stored in the hard disc 150, the program data is transmitted to the bit-buffer 160, and then supplied to the MPEG decoder 170 for decoding. Then, video data from the decoded MPEG data is fed to a screen of television set (not shown)or similar, and the audio data is output through a speaker of the television set via the PCM 190.

If it is required to record program data, the scene change detector 140 operates to generate a video index that consists of images from the points of the received program where there are scene changes. Video indexing is just one example of the provision of data for performing navigation, and it will be appreciated that the invention has broader application than this.

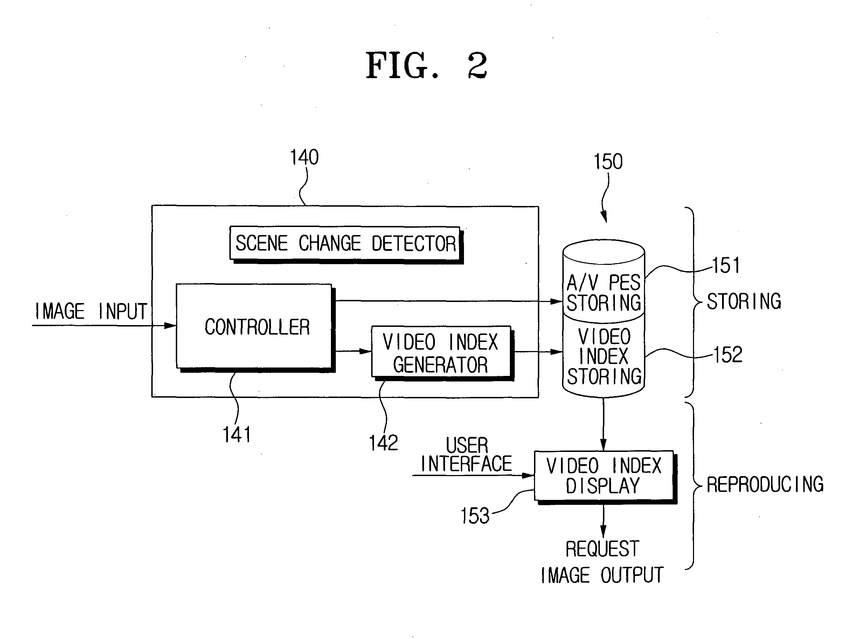

The scene change detector 140 will now be described in more detail, with reference to Figure 2. In Figure 2, the scene change detector 140 is shown to include a controller 141, that is arranged to detect scene change points from the input video data, and a video index generator 142, that is arranged to decodes the intraframe coded picture which is nearest to the detected scene change point, thus generating a video index.

The hard disc 150 includes an A/V data recording region 151, in which program data passed through the scene change detector 140 is recorded, and a video index storing region 152, where the video index provided by the video index generator 142 is stored. In the video index, images are arranged in a chronological order.

When a video index request signal is provided by a user interface, in response to a request by the user, the video index stored in the video index storing region 152 is provided using a video index display 153. It is preferable to display the video index such that the images corresponding to the detected scene change points are formed as icons, or thumbnails or similar, which are arranged in a temporal order. As for the video index display 153, a screen such as TV screen through which video data is output is employed.

The video index only shows images from points where a scene change occurs, and accordingly provides the user with information that effectively helps the user to search for the required part of the program.

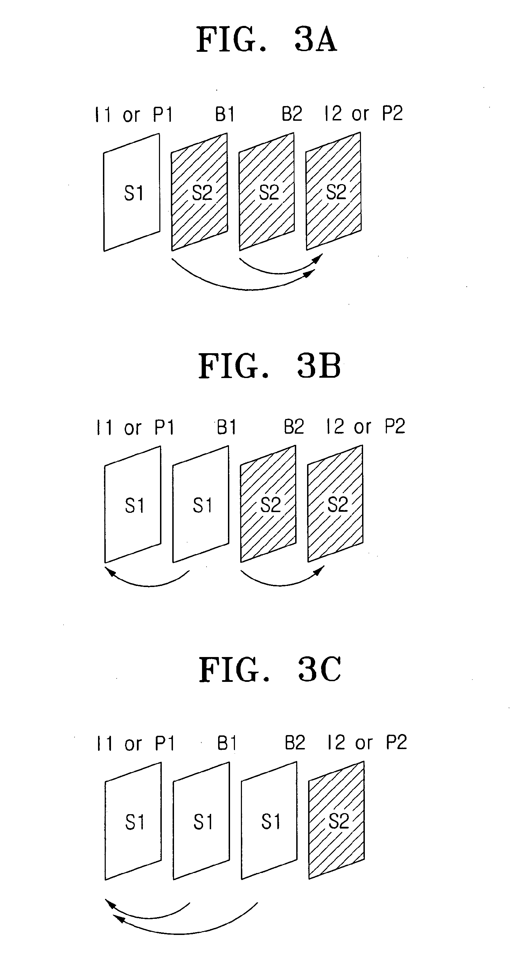

The detection of scene change points according to the invention uses a macro block type of bidirectionally-predictive coded picture of a group of pictures (GOP). The scene change detection does not need to decode all the picture frames. This will now be described with reference to Figures 3A to 3C, which are schematic views that illustrate intraframe coded pictures, or intraframe forward predictive coded pictures and bidirectionally-predictive coded pictures of the GOP. In these Figures, S1 indicates frames before scene change, and S2 indicates frames after scene change. In this case, each GOP contains four frames. There are three cases in which scene change can occur within a GOP, and one is shown in each Figure.

A first case is shown in Figure 3A, where the scene changes in (alternatively describable as before) the first bidirectionally-predictive coded picture (B1). In this case, there are backward motion compensations. Figure 3B shows a second case, in which scene change occurs in the second bidirectionally-predictive coded picture (B2). In this case, the motion compensation direction oppositely varies in front, and behind of, the bidirectionally-predictive coded picture (B2) where the scene changes. In the third case, shown in Figure 3C, scene change occurs in the intraframe coded picture (I2) or intraframe forward predictive coded picture (P2) next to the second bidirectionally-predictive coded picture (B2). In this case, forward motion compensation is performed. As described below, scene change points are detected using the macro block type information.

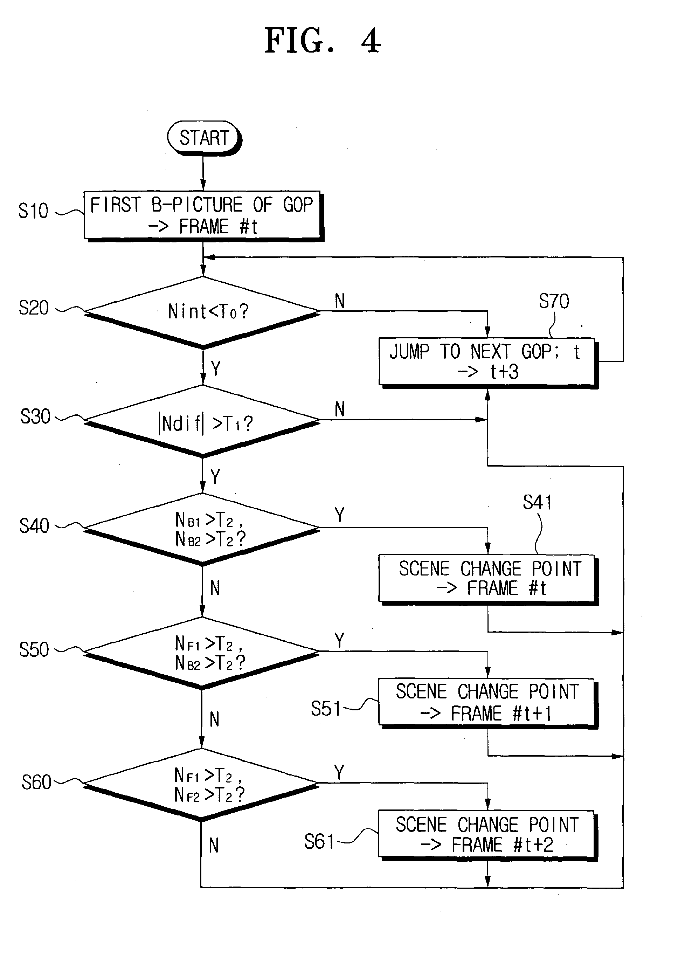

Figure 4 is a flowchart showing the scene change detection algorithm according to the invention that operates using the macro block type of the bidirectionally-predictive coded picture of the GOP. Using the scene change detection algorithm, processes of detecting scene change, indexing input images, and recording and reproducing the images are performed. These processes will be described below in detail with reference to Figures 1, 2 and 4.

The broadcasting signal input through the NIM 110 is applied to the DEMUX 120, so that one among the multiplexed broadcasting programs is selected through the DEMUX 120 according to a user selection. If there is a recording command for the selected program, the program data is input to the scene change detector 140 via the pre-buffer 130.

Since the program data input to the scene change detector 140 is in compressed form in MPEG format, the number *Nint* of motion compensation interpolated macro blocks of the bidirectionally-predictive coded picture in the GOP (Group of Picture) unit is counted. This allows simplification of the computations needed to determine scene change points in the compressed region.

Operation begins at step S10 The number of backward or forward interpolated macro blocks represents correlativity of the bidirectionally-predictive coded picture with the previous, or the next, intraframe coded picture, or with the intraframe forward predictive coded picture. Using this, if the number *Nint* of the interpolated macro blocks is less than a predetermined threshold *T*_{*0*}, it can be inferred that there is a scene change in the GOP. Also, where there is scene change in some part of the GOP, the motion compensation of the interpolated macro blocks is greater towards a certain direction, for example, it is greater backward, or greater forward. Accordingly, if it is determined in step S20 that the number *N*_{*int*} of the interpolated macro blocks equals or is less than the threshold *T*_{*0*}, it is inferred that the corresponding GOP might contains a scene change point, and the operation proceeds to step S30. In step S30 it is determined if the difference *N*_{*dif*} between the number of forward and backward motion compensation interpolated macro blocks equals or is greater than a threshold T₁. If so, then it is inferred that the scene does change in some part of the GOP, and operation proceeds to step S40. A negative determination from either if steps S20 and S30 indicates there are no scene changes in the GOP, and accordingly, scene change detection is performed on the next GOP by way of the step S70, which effects a jump to the next GOP.

If it is determined at step S40 that the number *N*_{*B1*} of backward motion compensation interpolated macro blocks of the first bidirectionally-predictive coded picture of the scene change-containing GOP, and the number *N*_{*B2*} of backward motion compensation-interpolated macro blocks of the second bidirectionally-predictive coded picture of the scene change-containing GOP is equal to or greater than a threshold *T*_{*2*}, this is an indication that backward motion compensations are greater in both of bidirectionally-predictive coded pictures. This relates to the bidirectionally-predictive coded pictures shown in Figure 3A. Here, it is inferred that scene change occurred in the first bidirectionally-predictive coded picture, which is indicated by step S41. Here, assuming the first bidirectionally-predictive coded picture of the GOP to be a frame number 't', it can be determined that the scene changed in the frame number 't'.

If it is determined at step S50 that the number *N*_{*F1*} of forward motion compensation interpolated macro blocks of the first bidirectionally-predictive coded picture is equal to or greater than the threshold *T*_{*2*}, and the number *N*_{*B2*} of backward motion compensation interpolated macro blocks of the second bidirectionally-predictive coded picture is equal to or greater than the threshold *T*_{*2*} , this is taken as an indication that the forward motion compensation is greater in the first bidirectionally-predictive coded picture, while the backward motion compensation is greater in the second bidirectionally-predictive coded picture. This is illustrated in Figure 3B described above. Since the forward motion compensation is greater in the first bidirectionally-predictive coded picture and the backward motion compensation is greater in the second bidirectionally-predictive coded picture, it is inferred at step S51 that the scene change occurred in the second bidirectionally-predictive coded picture. In other words, the scene change is determined to have occurred in the frame number t+1.

If at step S60 it is determined that the number *N*_{*F1*} of forward motion compensation interpolated macro blocks of the first bidirectionally-predictive coded picture is equal to or greater than the threshold *T*_{*2*}, and the number *N*_{*F2*} of forward motion compensation interpolated macro blocks of the second bidirectionally-predictive coded picture is equal to or greater than the threshold *T*_{*2*}, the backward motion compensation is greater in both of the first and the second bidirectionally-predictive coded pictures. Accordingly, as shown in Figure 3C, it can be inferred at step S61 that the scene change occurred in the intraframe coded picture or the intraframe forward predictive coded picture following the bidirectionally-predictive coded picture. In other words, the scene change is determined to have been occurred in the frame number t+2.

As described above, the points at which scene changes occur over the entire program can be determined by detecting the scene change points of the respective GOPs. The detected scene change points are recorded in the header position information. That is, header type information contained in the first 2-bit of the header position information indicates whether it is a scene change header, a picture header, or a GOP header. Using the header type information, the video index generator 142 generates a video index. In doing this, the intraframe coded picture nearest to each scene change point (or the first picture of a new scene) is encoded so that the image of the scene change point can be recovered, and the recovered images are arranged in a temporal order. The recovered images are minimised into a form of an icon, and arranged in the icon form. The generated video index is stored in the video index storing region 152 of the hard disc 150, and the program data is stored in the A/V storing region 151.

The stored video index is displayed on the video index display 153 upon receipt of video index request signal input through a user interface. Viewing the recovered images of the video index arranged in the temporal order, the user locates the point where he/she wants to view by selecting the corresponding icon. As the selection signal is received, the controller 141 starts reproducing the program from the point selected by the user.

During playback of the program, on receiving a forward skip (or fast forward) command, playback is skipped from the current point to the immediately succeeding image icon, and then resumed. Also, on receiving a backward skip - or rewind - command during the program reproducing, the reproducing is skipped from the current point to the immediately preceding image icon, and then resumed. The playback starting points always correspond to points having image icons associated therewith. On receiving an automatic search signal, playback may be performed with skipping at the scene change points.

Reproduction of a program is performed as follows. First, as the user inputs reproducing signal, using the video index, for a program having A/V data stored on the hard disc 150, program data stored in the A/V storing region 151 is read to the bit-buffer 160, and from there provided to the MPEG decoder 170. The MPEG decoder 170 decodes the compressed MPEG data, and the recovered A/V data is provided to a television screen and speaker respectively via the video encoder 180 and the PCM 190.

The above described scene change detection algorithm was tested on an MPEG-2 broadcasting stream consisting of 3000 frames of 300 macro blocks and 320 × 240 in size. Of 26 scene changes, 24 were detected, with an accuracy of 92.3%. There were no false scene change detections.

According to an embodiment of the present invention, the navigation function is provided without requiring all the frames of the compressed broadcasting program to be decoded, but by detecting scene changes in the compressed region of the broadcasting program. Accordingly, the scene changes can be detected in real time without requiring significant processing and memory resources. Detecting the scene changes in real time allows the real time storage of received programs together with a video index or similar, in a user friendly manner.

It will be understood by those skilled in the art that the invention is not limited to the described embodiments, but that various changes and modifications can be made within the scope of the invention as defined by the claims. For example, although the above-described embodiment illustrates a combined recording and reproducing receiver, the invention is not limited to this. The invention is applicable also to apparatus limited to having reproducing capability, such as a broadcasting receiver without recording capability. Also, the invention is applicable to apparatus having recording capability but no reproducing capability, for example a broadcasting receiver which is arranged to record received AV data onto a hard disc or an optical disc, for playback using another device.

## Claims

1. Apparatus **characterised in** having:
a controller (141) arranged to count the number of forward motion compensation interpolated macro blocks and backward motion compensation interpolated macro blocks of a bidirectionally-predictive coded picture of a group of pictures in digital data, and to determine a scene change point based on the counted number of blocks; and
an index generator (142) for generating an index including a decoded intraframe coded image near a scene change point so determined.

2. Apparatus as claimed in claim 1, further comprising a recording medium (150) including a data storing region (151) for storing the digital data, and an index storing region (152) for storing the index.

3. Apparatus as claimed in claim 1 or claim 2, further comprising an index display (153) for displaying the images of the index in a temporal order in a selectable manner.

4. Apparatus as claimed in claim 3, wherein the images in the index are smaller in size than the decoded images.

5. Apparatus as claimed in any preceding claim, wherein the controller is arranged to compare a difference between the number of forward motion compensation interpolated macro blocks and the number of backward motion compensation interpolated macro blocks with a predetermined threshold

6. Apparatus as claimed in any preceding claim, wherein the controller is arranged to compare the number of backward motion compensation interpolated macro blocks of a first bidirectionally-predictive coded picture of the group of pictures, and the number of backward motion compensation interpolated macro blocks of a second bidirectionally-predictive coded picture of the group of pictures, with a predetermined threshold.

7. Apparatus as claimed in any preceding claim, wherein the controller is arranged to compare the number of forward motion compensation interpolated macro blocks of a or the first bidirectionally-predictive coded picture of the group of pictures, and the number of backward motion compensation interpolated macro blocks of a or the second bidirectionally-predictive coded picture of the group of pictures, with a predetermined threshold.

8. Apparatus as claimed in any preceding claim, wherein the controller is arranged to compare the number of forward motion compensation interpolated macro blocks of a or the first bidirectionally-predictive coded picture of the group of pictures, and the number of forward motion compensation interpolated macro blocks of a or the second bidirectionally-predictive coded picture, with a predetermined threshold.

9. Apparatus as claimed in any preceding claim, implemented as apparatus for recording and/or reproducing a received compressed digital broadcasting program.

10. A method of generating an index, **characterised in** comprising:
counting the number of forward motion compensation interpolated macro blocks and backward motion compensation interpolated macro blocks of a bidirectionally-predictive coded picture of a group of pictures in digital data;
determining a scene change point (s20) from the counted number of blocks;
decoding an intraframe coded image near a determined scene change point; and
generating an index including the decoded image.

11. A method as claimed in claim 10, in which the scene change point determining step comprises comparing (S20) the counted number of motion compensation interpolated macro blocks to a predetermined threshold.

12. A method as claimed in claim 10 or claim 11, wherein the scene change point determining step includes comparing a difference between the number of forward motion compensation interpolated macro blocks and the number of backward motion compensation interpolated macro blocks with a predetermined threshold (S30).

13. A method as claimed in any of claims 10 to 12, further comprising storing the digital data on a data storing region of a recording medium, and storing the index on an index storing region of the recording medium.

14. A method as claimed in any of claims 10 to 13, further comprising displaying the images of the index in a temporal order in a selectable manner.

15. A method as claimed in any of claims 10 to 14, comprising, responsive to a skip signal, reproducing a program from the digital data from a succeeding or preceding scene change point.

16. A method as claimed in any of claims 10 to 15, wherein the index generating step comprises reducing the size of the decoded images.

17. A method as claimed in any of claims 10 to 16, wherein the scene change point determining step comprises comparing the number of backward motion compensation interpolated macro blocks of a first bidirectionally-predictive coded picture of the group of pictures, and the number of backward motion compensation interpolated macro blocks of a second bidirectionally-predictive coded picture of the group of pictures, with a predetermined threshold (S40).

18. A method as claimed in any of claims 10 to 17, wherein the scene change point determining step comprises comparing the number of forward motion compensation interpolated macro blocks of a or the first bidirectionally-predictive coded picture of the group of pictures, and the number of backward motion compensation interpolated macro blocks of a or the second bidirectionally-predictive coded picture of the group of pictures, with a predetermined threshold (S50).

19. A method as claimed in any of claims 10 to 18, wherein the scene change point determining step comprises comparing the number of forward motion compensation interpolated macro blocks of a or the first bidirectionally-predictive coded picture of the group of pictures, and the number of forward motion compensation interpolated macro blocks of a or the second bidirectionally-predictive coded picture, with a predetermined threshold (S60).

20. A digital data recording and/or reproducing apparatus for recording and reproducing an incoming digital broadcasting program in compressed format, comprising:
a controller for counting the number of forward motion compensation interpolated macro blocks and backward motion compensation interpolated macro blocks of a bidirectionally-predictive coded picture of a group of picture (GOP) of the digital data, and detecting a point where a scene change occurs based on the counted number; and
a video index generator for generating a video index by decoding an intraframe coded picture nearest to the detected point of scene change of each GOP, reproducing images and arranging the reproduced images.

21. The digital data recording and/or reproducing apparatus of claim 20, further comprising a recording medium including a data storing region that stores the digital data therein, and a video index storing region that stores the video index therein.

22. The digital data recording and/or reproducing apparatus of claim 20, further comprising a video index display for displaying the video index in which the reproduced images are arranged in a temporal order.

23. The digital data recording and/or reproducing apparatus of claim 22, wherein the recovered images are minimized, and arranged in, the form of an icon.

24. The digital data recording and/or reproducing apparatus of claim 20, wherein the controller detects a scene change in a first bidirectionally-predictive coded picture, upon determining that the number of backward motion compensation interpolated macro blocks of the first bidirectionally-predictive coded picture of the GOP, and the number of backward motion compensation interpolated macro blocks of a second bidirectionally-predictive coded picture of the GOP, are equal to or greater than a predetermined threshold.

25. The digital data recording and/or reproducing apparatus of claim 20, wherein the controller detects a scene change in a second bidirectionally-predictive coded picture, when determining that the number of forward motion compensation interpolated macro blocks of the first bidirectionally-predictive coded picture of the GOP, and the number of backward motion compensation interpolated macro blocks of the second bidirectionally-predictive coded picture of the GOP, are equal to or greater than a predetermined threshold.

26. The digital data recording and/or reproducing apparatus of claim 20, wherein the controller detects a scene change in an intraframe coded picture, or a intraframe forward predictive coded picture next to the second bidirectionally-predictive coded picture, when determining that the number of forward motion compensation interpolated macro blocks of a first bidirectionally-predictive coded picture of the GOP, and the number of forward motion compensation interpolated macro blocks of a second bidirectionally-predictive coded picture, are equal to or greater than a predetermined threshold.

27. The digital data recording and/or reproducing apparatus of claim 20, wherein the controller controls so that the recorded digital broadcasting program can be reproduced from a selected position, when there is an input of a selection signal for selecting a predetermined image among the recovered images of the displayed video index.

28. A control method for a digital data recording and/or reproducing apparatus that records and reproduces a digital broadcasting program, comprising the steps of:
dividing an incoming video program data into a plurality of groups of picture (GOP), and counting the number of forward motion compensation interpolated macro blocks and the number of backward motion compensation interpolated macro blocks of a bidirectionally-predictive coded picture of each GOP;
detecting a point where scene change occurs based on the counted number of forward and backward motion compensation interpolated macro blocks;
decoding an intraframe coded picture nearest to the frame where the scene change point is detected, and thereby recovering images; and
generating a video index in a manner such that the recovered images can be arranged in a temporal order.

29. The control method of claim 28, wherein the scene change point detecting step determines that there is a frame in the GOP having a scene change therein, upon determining that the number of motion compensation interpolated macro blocks is lower than a predetermined threshold.

30. The control method of claim 28, wherein the scene change point detecting step determines that there is a frame in the GOP having a scene change therein, upon determining that a difference between the number of forward motion compensation interpolated macro blocks and the number of backward motion compensation interpolated macro blocks is greater than a predetermined threshold.

31. The control method of claim 28, wherein the scene change point detecting step determines that there is a scene change in a first bidirectionally-predictive coded picture of the GOP, upon determining that the number of backward motion compensation interpolated macro blocks of the first bidirectionally-predictive coded picture of the GOP, and the number of backward motion compensation interpolated macro blocks of a second bidirectionally-predictive coded picture of the GOP, are equal to or greater than a predetermined threshold.

32. The control method of claim 28, wherein the scene change point detecting step determines that there is a scene change in a second bidirectionally-predictive coded picture of the GOP, upon determining that the number of forward motion compensation interpolated macro blocks of a first bidirectionally-predictive coded picture of the GOP, and the number of backward motion compensation interpolated macro blocks of the second bidirectionally-predictive coded picture of the GOP, are equal to or greater than a predetermined threshold.

33. The control method of claim 28, wherein the scene change point detecting step determines that there is a scene change in an intraframe coded picture or a intraframe forward predictive coded picture next to a second bidirectionally-predictive coded picture of the GOP, upon determining that the number of forward motion compensation interpolated macro blocks of a first bidirectionally-predictive coded picture of the GOP, and the number of forward motion compensation interpolated macro blocks of the second bidirectionally-predictive coded picture of the GOP, are equal to or greater than a predetermined threshold.

34. The control method of claim 28, wherein the video index generating step generates a video index in a manner such that intraframe coded picture at the scene change points detected throughout the video program is decoded, reproduced, ionised and arranged.

35. The control method of claim 34, further comprising the step of displaying the video index in which the icons of the scene change points are arranged in a temporal order, upon receipt of a video index request signal.

36. The control method of claim 35, wherein the recorded digital broadcasting program is reproduced from a selected position, when there is an input of a selection signal for selecting a predetermined image among the recovered images of the displayed video index.

37. The control method of claim 34, wherein, when there is an input of a skip signal during the reproducing of the digital broadcasting, the program is reproduced from a nearest icon of scene change point.
